# FASCICULE DE BREVET EUROPEEN

(11) **EP 0 408 407 B1**
(45) Date de publication et mention de la délivrance du brevet: **12.05.1993**
(21) Numéro de dépôt: 90401688.8
(22) Date de dépôt: 15.06.1990
(51) Int. Cl.: B61D 33/00, B60N 2/02

(54) **Siège à dossier réversible**
Sitz mit umlegbarer Lehne
Seat with reversible back

(30) Priorité: 05.07.1989 FR 8909046
(43) Date de publication de la demande: 16.01.1991
(73) Titulaire: ETABLISSEMENTS COMPIN Société Anonyme dite:, F-75008 Paris (FR)
(72) Inventeur: Bulte, Jacques, F-93220 Gagny (FR)
(74) Mandataire: Jolly, Jean-Pierre

(56) Documents cités:
- WO-A-83/00664
- US-A- 4 081 051
- US-A- 4 407 542

## Description

La présente invention concerne un siège, notamment pour voiture de chemin de fer, qui est pourvu d'un dossier susceptible d'être basculé entre deux positions extrêmes d'utilisation symétriques, afin de permettre à l'utilisateur d'être toujours assis dans le sens de la marche du train.

On connaît déjà un siège de ce type, dans lequel la partie inférieure du dossier est reliée par deux paires de bielles, respectivement à deux plaques-supports verticales disposées de part de d'autre du siège. Dans une forme de réalisation connue, les bielles sont libres de tout verrouillage et le dossier ne tient dans chacune desdites positions que sous l'effet de la gravité résultant de la légère inclinaison du dossier vers l'arrière par rapport au sens de la marche. Pour faire passer le dossier d'une position à l'autre, il suffit de la faire basculer, par exemple en tirant sur une poignée fixée à sa partie supérieure.

Par les brevets US-A-4 407 542, US-A-4081051 et Wo-A-8300664, il est connu de verrouiller le dossier dans chacune de ses positions, par exemple au moyen de deux pênes fixés respectivement sur les bielles et de deux gâches fixées sur les plaques-supports. Lorsqu'un pêne au moins pénètre dans une gâche, le dossier se trouve bloqué en position.

Toutefois, dans cette forme de réalisation, les pênes se trouvent relativement près de l'articulation des bielles sur la plaque-support, de sorte qu'il se manifeste des jeux de fonctionnement relativement importants au niveau des articulations des bielles sur le dossier, qui se traduisent par une instabilité du dossier dans ses positions d'utilisation.

De plus, les deux systèmes de verrouillage qui se trouvent de part et d'autre du siège étant indépendants, il peut arriver que l'un d'eux seulement s'enclenche lorsque le dossier arrive dans une de ses positions d'utilisation, de sorte que toute la partie du dossier se trouvant à l'opposé est libre et qu'il en résulte un gauchissement du dossier et l'apparition d'efforts de torsion tendant à déformer les articulations des bielles sur le dossier et sur les plaques-supports.

La présente a pour but de remédier à ces inconvénients et concerne à cet effet un siège à dossier réversible du type comprenant, de chaque côté de l'assise, deux bielles dont deux extrémités sont articulées sur la partie inférieure du dossier et les deux autres extrémités sont articulées sur une plaque-support verticale en deux points situés sur une même horizontale, de sorte que le dossier peut pivoter entre deux positions de service symétriques par rapport au plan médiateur au segment formé par lesdits deux points, ledit siège étant caractérisé en ce qu'il comporte en outre :
- une biellette de verrouillage de dossier montée de chaque côté du siège, une première extrémité de chaque biellette étant articulée sur la partie inférieure du dossier et une seconde extrémité étant reçue dans une lumière verticale formée sur la plaque-support dans ledit plan médiateur où elle peut coulisser, ladite biellette étant disposée de manière que lorsque le dossier se trouve dans l'une de ses deux positions de service, sa seconde extrémité soit à l'extrémité supérieure de la lumière,
- des moyens de butée escamotables destinés à maintenir ladite seconde extrémité de la biellette dans ladite position,
- et des moyens de commande actionnables par l'opérateur, et destinés à escamoter les moyens de butée afin de permettre à ladite seconde extrémité de la biellette de coulisser librement dans la lumière et d'autoriser ainsi le basculement du dossier vers son autre position.

Dans une forme de réalisation particulière, les moyens de butée sont constitués par un levier coudé, articulé par son coude sur la plaque-support et normalement rappelé par des moyens ressorts vers une position par laquelle l'un de ses bras recouvre au moins partiellement la lumière, bloquant ainsi la seconde extrémité de la biellette en position haute dans la lumière.

Avantageusement, ledit bras du levier coudé présente un profil de came excentrique qui, lorsqu'il coopère avec la biellette, élimine tout jeu de cette dernière aussi bien au niveau de la lumière que de son articulation sur le dossier.

En raison de l'élimination de ces jeux, le dossier est assujetti de façon positive et particulièrement stable dans chacune de ses positions, contrairement à la technique antérieure exposée précédemment, où le verrouillage était effectué sur les bielles mêmes.

Les calculs et les essais effectués par la Demanderesse ont montré que l'on doit donner à la biellette selon l'invention, une inclinaison optimale par rapport à l'horizontale pour qu'elle assure un bon verrouillage du dossier et qu' en même temps son extrémité coulisse librement dans la lumière lorsqu'elle est libérée. En effet, pour obtenir un verrouillage maximal, il faudrait que la biellette soit pratiquement perpendiculaire à l'axe de la lumière, puisqu'en exerçant un couple sur le dossier, la biellette viendrait alors buter contre le flan vertical de la lumière. Mais cette position n'est pas acceptable, étant donné qu'après effacement du levier coudé, l'extrémité de la biellette aurait des difficultés à descendre dans la lumière puisque le couple exercé sur le dossier serait transmis à la biellette sous forme d'une force essentiellement perpendiculaire à l'axe de la lumière et n'ayant pratiquement pas de composante verticale.

C'est pourquoi selon l'invention l'on choisit la solution de compromis qui consiste à donner à la biellette une faible inclinaison avec la normale à l'axe de la lumière, de manière que, l'effort qui s'exerce dans l'axe de la biellette admette une composante importante perpendiculaire à la lumière, et une composante verticale suffisante pour faire descendre l'extrémité de la biellette dans la lumière, lorsque la biellette est déverrouillée.

Selon un mode de réalisation de l'invention, les moyens de commande comprennent une pédale actionnable avec le pied et reliée par des moyens de transmission au second bras du levier coudé.

Lorsque la pédale est pressée, le levier coudé est pivoté dans un sens pour lequel son bras à extrémité en forme de came libère la lumière.

Comme on l'a dit précédemment, deux systèmes de verrouillage identiques peuvent être montés de part et d'autre du siège. Dans ce cas, il est avantageux de prévoir une liaison permettant d'actionner les deux leviers coudés par la même pédale.

L'invention sera expliquée à présent en détail à propos de la description d'un mode de réalisation préféré faite en regard des dessins annexés dans lesquels :
La figure 1 est une vue de profil d'un siège pourvu d'un dispositif de verrouillage du dossier selon l'invention ;
La figure 2 est une vue partielle de dos de la figure 1 ; et
La figure 3 est une vue en perspective de la commande de déverrouillage du dispositif de verrouillage.

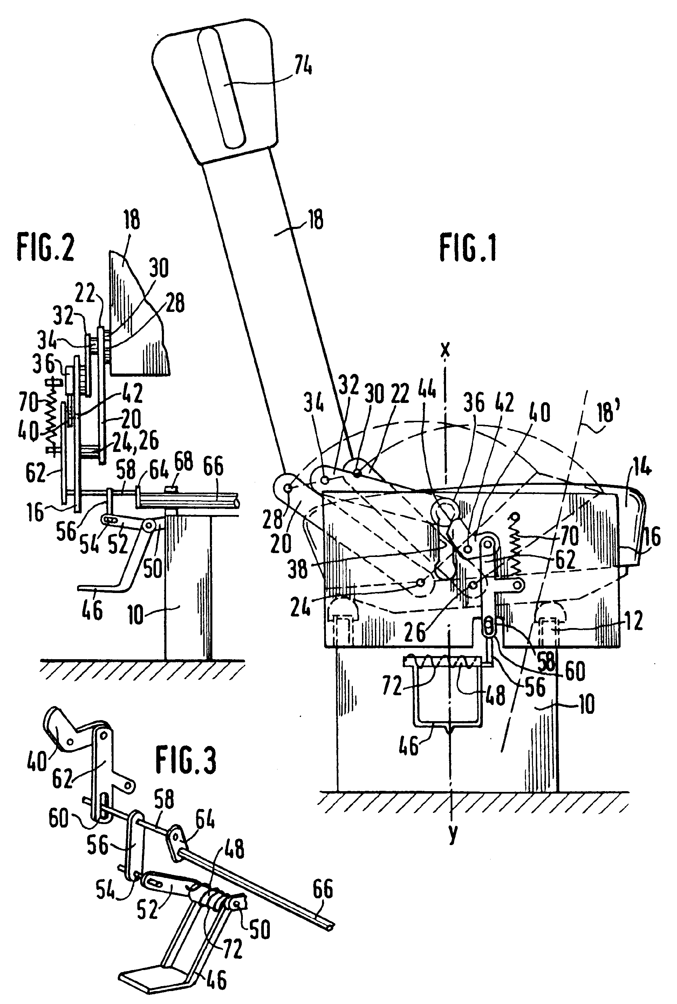

Le siège selon l'invention comprend une piétement 10 solidarisé du plancher de la voiture par tout moyen connu, et sur lequel est montée une ossature en profilés 12 servant à supporter une assise rembourrée 14. Sur le piétement et de part et d'autre de l'assise sont fixées deux plaques-supports verticales et parallèles, dont une seule 16 est visible sur les figures 1 et 2.

Le siège comporte également un dossier 18 qui est susceptible d'être basculé entre une première position représentée en traits pleins sur la figure 1, et une seconde position qui, pour la clarté du dessin, n'est matérialisée que par la ligne en traits tiretés 18′, mais qui sera mieux précisée par la suite. Le dossier peut ainsi être positionné de manière que le voyageur soit toujours dans le sens de la marche du train.

A cet effet, le dossier est articulé aux plaques-supports 16 au moyen de deux paires de bielles, dont l'une 20,22 est visible sur les figures 1 et 2, la seconde paire se trouvant de l'autre côté de l'assise. Plus précisément, lesdites bielles sont articulées, d'une part sur la plaque-support 16 par deux axes 24,26 situés sur une même ligne horizontale et d'autre part, sur le bord inférieur du dossier par deux axes 28,30, disposés de façon que dans chacune ses positions de service, le dossier soit légèrement incliné vers l'arrière par rapport au sens de la marche du train.

Il est prévu d'autre part des moyens permettant de verrouiller le dossier dans l'une de ses positions 18,18′, afin de l'empêcher de basculer accidentellement sous l'effet d'une décélération importante ou d'un choc.

Ces moyens de verrouillage sont constitués par deux biellettes, dont une seule 32 est représentée sur les figures 1 et 2. Chaque biellette est articulée sur le bord inférieur du dossier, par un axe 34 situé au milieu du segment qui joint les axes 28,30. L'autre extrémité de la biellette est munie d'un téton épaulé 36 qui coulisse dans une lumière verticale 38 percée dans la plaque-support 16, à l'intersection de celle-ci avec le plan médiateur du segment joignant les axes 24,26 des bielles.

La longueur de la lumière ainsi que les positions relatives de ses extrémités par rapport aux axes 24,26 sont choisies pour que lorsque le dossier est dans l'une de ses positions extrêmes 18,18′, le téton épaulé 36 se trouve à l'extrémité supérieure de la lumière.

Le téton épaulé est retenu dans cette position par l'un des bras d'un levier coudé 40, lequel est monté pivotant autour d'un axe 42 porté par la plaque-support et qui traverse le levier coudé au voisinage de son coude. L'extrémité 44 dudit bras qui est en contact avec le téton épaulé présente un profil de came excentrique, capable d'exercer sur la biellette un effort de serrage énergique qui élimine tout jeu de fonctionnement au niveau des articulations 34 et 36.

Le levier coudé peut être entraîné dans le sens horaire en libérant le téton fileté et lui permettant de descendre dans la lumière, grâce à des moyens de commande de déverrouillage qui seront décrits à présent en regard des figures 1 à 3.

Lesdits moyens comprennent une pédale 46 actionnable au pied et qui est montée pivotante autour d'un axe horizontal 48 porté par un élément 50 solidaire du piétement 10. La pédale est solidaire d'un retour 52 qui est traversé à son extrémité par un axe horizontal 54. Sur cet axe est articulée l'extrémité inférieure d'une tige verticale 56 laquelle porte à son extrémité supérieure un axe horizontal 58. Une extrémité de l'axe 58 se débat dans une lumière 60 percée dans une tringle 62 dont l'extrémité supérieure est articulée sur le second bras du levier coudé 42. L'autre extrémité de l'axe 58 est solidaire d'un bras 64 qui est calé sur un tube de liaison 66. Celui-ci est monté tournant autour de son axe dans des paliers 68. La tige de liaison est reliée à une tringlerie identique à celle qui vient d'être décrite et qui est située de l'autre côté du siège.

La tringle 62 est rappelée vers une position haute par un ressort 70. De même, la pédale est maintenue fermement en position relevée par un ressort de torsion 72 qui est enroulé autour de l'axe 48.

On expliquera à présent le positionnement du dispositif de verrouillage du dossier : celui-ci est supposé verrouillé initialement dans la position représentée à la figure 1, position qu'il occupe lorsque le train se déplace vers la droite sur la figure. Lorsque le train doit se déplacer en sens inverse, l'agent de service fait basculer le dossier 18 vers la position 18′. A cet effet, il appuie sur la pédale 46 qui, en pivotant autour de l'axe 48 à l'encontre de la force du ressort 72, entraîne vers le bas l'axe 54 et fait donc descendre (sur les figures 2 et 3) la tige 56. Dans ce mouvement, cette dernière entraîne en rotation le tube de liaison 66 autour de son axe. Les deux tringles 62 qui se trouvent des deux côtés du siège sont de ce fait entraînées vers le bas à l'encontre de la force de leur ressort respectif 70, ce qui provoque le pivotement des leviers coudés 40 dans le sens horaire sur la figure 1. Les bras à profil de came 44 dégagent les lumières 38, de sorte que les biellettes 32 sont désormais libres.

Il suffit alors à l'agent de tirer sur la poignée 74 pour faire basculer le dossier 18. Les tétons épaulés 36 amorcent leur descente dans leur lumière respective. L'agent peut alors relâcher la pédale puisque les tétons 36 maintiennent les leviers coudés 40 en position écartée. Au cours du basculement, les extrémités 28,30 des bielles 20,22 décrivent les arcs de cercle montrés en traits tiretés sur la figure 1. Après que le dossier a traversé la ligne de symétrie, les tétons épaulés remontent dans leur lumière et dès qu'ils sont arrivés en bout de course haute dans ces dernières, les leviers coudés 40 sont rappelés par les ressorts 70 vers leur position où ils bloquent les tétons épaulés. Les cames excentriques 44 assurent un blocage énergique des biellettes en éliminant les jeux de fonctionnement à l'articulation 34. Le dossier est alors solidemment immobilisé en position.

## Revendications

1. Siège à dossier réversible du type comprenant de chaque côté de l'assise (14) deux bielles (20,22) dont deux extrémités (28,30) sont articulées sur la partie inférieure du dossier (18) et les deux autres extrémités sont articulées sur une plaque-support verticale (16) en deux points (24,26) situés sur une même horizontale de sorte que le dossier peut pivoter entre deux positions de service symétriques par rapport au plan (x-y) médiateur au segment formé par lesdits deux points, ledit siège étant caractérisé en ce qu'il comporte en outre :
- une biellette de verrouillage de dossier (32) montée de chaque côté du siège, une première extrémité (34) de chaque biellette étant articulée sur la partie inférieure du dossier et une seconde extrémité (36) étant reçue dans une lumière verticale (38) formée sur la plaque-support (16) dans ledit plan médiateur (x-y) où elle peut coulisser, ladite biellette étant disposée de manière que lorsque le dossier se trouve dans l'une de ses deux positions de service, sa seconde extrémité (36) soit à l'extrémité supérieure de la lumière,
- des moyens de butée escamotables (40,42) destinés à maintenir ladite seconde extrémité de la biellette dans ladite position,
- et des moyens de commande (46,62) actionnables par l'opérateur, et destinés à escamoter les moyens de butée afin de permettre à ladite seconde extrémité de la biellette de coulisser librement dans la lumière (38) et d'autoriser ainsi le basculement du dossier vers son autre position.

2. Siège à dossier réversible selon la revendication 1, caractérisé en ce que les moyens de butée sont constitués par un levier coudé (40), articulé par son coude (42) sur la plaque-support (16) et qui est normalement rappelé par des moyens ressorts (70) vers une position pour laquelle l'un de ses bras recouvre au moins partiellement la lumière (38), bloquant ainsi la seconde extrémité (36) de la biellette en position haute dans la lumière.

3. Siège à dossier réversible selon la revendication 1, caractérisé en ce que ledit bras du levier coudé présente un profil de came excentrique (44) qui, lorsqu'il coopère avec la biellette (32), élimine tout jeu des extrémités de cette dernière aussi bien au niveau de la lumière que de son articulation (34) sur le dossier.

4. Siège à dossier réversible selon la revendication 1, caractérisé en ce que chaque biellette (32) présente, lorsqu'elle est en position de verrouillage, une inclinaison par rapport à la lumière (38) telle qu'un effort s'exerçant dans l'axe de la biellette admette une forte composante horizontale et une faible composante verticale.

5. Siège à dossier réversible selon la revendication 1, caractérisé en ce que ladite seconde extrémité de la biellette porte un téton épaulé (36) qui est reçu dans la lumière (38).

6. Siège à dossier réversible selon la revendication 1, caractérisé en ce que les moyens de commande comprennent une pédale (46) actionnable avec le pied et reliée par des moyens de transmission (52,54,56,62) au second bras du levier coudé (40), de manière que lorsque la pédale est pressée, le levier coudé soit pivoté dans un sens pour lequel son bras à extrémité en forme de came libère la lumière (38).

7. Siège à dossier réversible selon la revendication 6, caractérisé en ce que lesdits moyens de transmission comprennent une tringle verticale (62) dont l'extrémité supérieure est articulée sur le bras du levier coudé (40) opposé à celui qui est recouvre la lumière (38), ladite tringle étant montée coulissante verticalement et étant rappelée normalement en position haute par un ressort de rappel (70), position pour laquelle elle sollicite le levier coudé en position d'obturation de la lumière (38), ladite tringle pouvant être entraînée vers le bas à l'encontre de la force dudit ressort, lorsque la pédale est appuyée, par une tringlerie (52,54,56) qui relie cette dernière à l'extrémité inférieure de la tringle.

8. Siège à dossier réversible selon l'une des revendications précédentes,caractérisé en ce qu'il comprend deux systèmes de verrouillage de dossier identiques montés de part et d'autre du siège, et reliés par un moyen de liaison (66) de manière que les deux leviers coudés (40) situés des deux côtés du siège puissent être actionnés par la même pédale (46).

9. Siège à dossier réversible selon la revendication 8, caractérisé en ce que ledit moyen de liaison est constitué par un tube (66) monté pivotant autour de son axe dans des paliers (68), et aux extrémités duquel sont fixées respectivement deux bras radiaux (64), le mouvement de la pédale étant transmis à la fois auxdits bras (64) et aux tringles (62) par une bielle de liaison (56).

## Patentansprüche

1. Sitz mit umlegbarer Lehne, welcher beiderseits des Sitzes (14) zwei Einstellstangen (20, 22) aufweist, von denen zwei Enden (28, 30) auf dem unteren Teil der Lehne (18) angelenkt sind, während die beiden anderen Enden auf einer vertikalen Trägerplatte (16) an zwei Punkten (24, 26) angelenkt sind, die auf derselben Horizontale liegen, so daß die Lehne zwischen zwei bezüglich der Mittelebene (x-y) zu dem von den beiden Punkten gebildeten Segment symmetrischen Betriebsstellungen versschwenkbar ist, wobei der Sitz dadurch gekennzeichnet ist, daß er des weiteren folgendes aufweist:
- eine Verriegelungsstange (32) zum Feststellen der Lehne, welche beiderseits des Sitzes angeordnet ist, wobei ein erstes Ende (34) jeder Stange auf dem unteren Abschnitt der Lehne angelenkt ist und ein zweites Ende (36) in einer vertikalen Öffnung (38) aufgenommen ist, welche auf der Trägerplatte (16) in der Mittelebene (x-y) ausgebildet ist, wo sie gleiten kann, während die Stange so angeordnet ist, daß ihr zweites Ende (36) sich am oberen Ende der Öffnung befindet, wenn die Lehne in eine ihrer beiden Betriebsstellungen geschwenkt ist,
- einziehbare Anschlagmittel (40, 42) zum Halten des zweiten Endes der Stange in dieser Stellung,
- und Betätigungsmittel (46, 62), welche vom Bediener betätigbar und dazu vorgesehen sind, die Anschlagmittel einzuziehen, damit das zweite Ende der Stange frei in der Öffnung (38) gleiten kann und so ein Kippen der Lehne in ihre andere Position möglich ist.

2. Sitz mit umlegbarer Lehne nach Anspruch 1 dadurch gekennzeichnet, daß die Anschlagmittel aus einem gekröpften Hebel (40) bestehen, welcher an seiner Kröpfung (42) auf der Trägerplatte (40) angelenkt ist und normalerweise durch Federeinrichtungen (70) in eine Stellung gespannt wird, in welcher einer seiner Arme zumindest teilweise die Öffnung (38) überdeckt und dabei das zweite Ende (36) der Stange in der oberen Stellung in der Öffnung feststellt.

3. Sitz mit umlegbarer Lehne nach Anspruch 1, dadurch gekennzeichnet, daß der Arm des gekröpften Hebels ein Exzenternockenprofil (44) aufweist, welches während des Zusammenwirkens mit der Stange (32) jegliches Spiel der Enden der letzteren sowohl in Höhe der Öffnung als auch an ihrer Anlenkung (34) auf der Lehne beseitigt.

4. Sitz mit umlegbarer Lehne nach Anspruch 1, dadurch gekennzeichnet, daß jede Stange (32) eine Neigung gegenüber der Öffnung (38) aufweist, wenn sie sich in Verriegelungsstellung befindet, so daß eine in der Achse der Stange wirksame Kraft eine starke horizontale Komponente und eine schwache vertikale Komponente zuläßt.

5. Sitz mit umlegbarer Lehne nach Anspruch 1, dadurch gekennzeichnet, daß das zweite Ende der Stange einen in der Öffnung (38) aufgenommenen Kopf mit Schulter (36) aufweist.

6. Sitz mit umlegbarer Lehne nach Anspruch 1, dadurch gekennzeichnet, daß die Betätigungseinrichtung ein mit dem Fuß betätigbares Pedal (46) aufweist, welches mittels Übertragungseinrichtungen (52, 54, 56, 62) mit dem zweiten Arm des gekröpften Hebels (40) so verbunden ist, daß beim Niederdrücken des Pedals der gekröpfte Hebel in eine Richtung geschwenkt wird, in welcher sein Arm mit nockenförmigen Ende die Öffnung (38) freigibt.

7. Sitz mit umlegbarer Lehne nach Anspruch 6, dadurch gekennzeichnet, daß die Übertragungseinrichtung ein vertikales Gestängeteil (62) aufweist, dessen oberes Ende auf dem Arm des gekröpften Hebels (40) angelenkt ist, welcher gegenüber dem die Öffnung (38) überdeckenden liegt, wobei das Gestängeteil vertikal verschieblich angeordnet und normalerweise mittels einer Rückstellfeder (70) in die obere Stellung gespannt ist, in welcher es den gekröpften Hebel in eine Stellung spannt, in welcher er die Öffnung (38) verschließt, wobei das Gestängeteil entgegen der Kraft der Feder nach unten über ein Gestänge (52, 54, 556) bewegbar ist, wenn das Pedal niedergedrückt wird, wobei dieses Gestänge das Pedal mit dem unteren Ende des Gestängeteils verbindet.

8. Sitz mit umlegbarer Lehne nach einem der vorhergehenden Ansprüche, dadurch gekennzeichnet, daß er zwei identische Systeme zur Verriegelung der Lehne aufweist, welche beiderseits des Sitzes angeordnet und mittels einer Verbindungseinrichtung (66) so verbunden sind, daß die beiden beiderseits des Sitzes vorgesehen gekröpften Hebel (40) über dasselbe Pedal (46) betätigbar sind.

9. Sitz mit umlegbarer Lehne nach Anspruch 8, dadurch gekennzeichnet, daß die Verbindungseinrichtung aus einem um seine Achse in Lagern (68) verschwenkbaren Rohr (66) besteht, an dessen Enden jeweils zwei radiale Arme (64) befestigt sind, wobei die Bewegung des Pedals gleichzeitig auf die Arme (64) und das Gestängeteil (62) über eine Verbindungsstange (56) übertragen wird.

## Claims

1. A reversible-backed seat of the type comprising two connecting rods (20, 22) on each side of the seat part (14), the two ends (28, 30) of which connecting rods (20, 22) are articulated to the lower part of the back (18) and the other two ends of which are articulated to a vertical support plate (16) at two points (24, 26) situated on a single horizontal line in such a way that the back may pivot between two positions of use symmetrical with respect to the plane (x-y) mid-perpendicular to the segment formed by said two points, said seat being characterized in that it further comprises:
- a back locking link (32) mounted each side of the seat, a first end (34) of each link being articulated to the lower part of the back and a second end (36) being accommodated in a vertical slot (38) formed on the support plate (16) in said mid-perpendicular plane (x-y) where it may slide, said link being arranged in such a way that when the back is in one of its two positions of use, its second end (36) is at the upper end of the slot,
- retractable abutment means (40, 42) for maintaining said second end of the link in said position,
- and control means (46, 62) actuatable by the operator and designed to retract the abutment means in order to permit said second end of the link to slide freely in the slot (38) and thus to permit swinging of the back towards its other position.

2. A reversible-backed seat according to claim 1, characterized in that the abutment means consist of a bent lever (40) articulated by its bend (42) to the support plate (16) and which is normally returned by spring means (70) towards a position in which one of its arms at least partially covers the slot (38), thereby blocking the second end (36) of the link in the upper position in the slot.

3. A reversible-backed seat according to claim 1, characterized in that said arm of the bent lever has an eccentric cam shape (44) which, when it cooperates with the link (32), eliminates any play around the ends of the latter both at the level of the slot and of its articulation (34) to the back.

4. A reversible-backed seat according to claim 1, characterized in that, when in the locking position, each link (32) is included with respect to the slot (38) such that force being exerted along the axis of the link allows a strong horizontal component and a weak vertical component.

5. A reversible-backed seat according to claim 1, characterized in that said second end of the link carries a shouldered stud (36) which is accommodated in the slot (38).

6. A reversible-backed seat according to claim 1, characterized in that the control means comprise a pedal (46) actuatable with the foot and connected by transmission means (52, 54, 56, 62) to the second arm of the bent lever (40), in such a way that, when the pedal is pressed, the bent lever is pivoted in a direction in which its arm with an end in the form of a cam frees the slot (38).

7. A reversible-backed seat according to claim 6, characterized in that said transmission means comprise a vertical rod (62) the upper end of which is articulated to the opposite arm of the bent lever (40) from that which covers the slot (38), said rod (62) being mounted to slide vertically and being returned normally into the upper position by a return spring (70), in which position it stresses the bent lever into a position in which it blocks the slot (38), said rod (62) being able to be driven downwards against the force of said spring, when the pedal is pressed, by a rod assembly (52, 54, 56) which connects the latter to the lower end of the rod (62).

8. A reversible-backed seat according to any one of the preceding claims, characterized in that it comprises two identical back locking systems mounted on each side of the seat and connected by a connection means (66) in such a way that the two bent levers (40) situated on the two sides of the seat may be actuated by the same pedal (46).

9. A reversible-backed seat according to claim 8, characterized in that said connection means consists of a tube (66) mounted pivotally about its axis in bearings (68), and has fixed to its ends respectively two radial arms (64), the movement of the pedal being transmitted both to said arms (64) and to the rods (62) by a connecting rod (56).
